# EUROPEAN PATENT SPECIFICATION

(11) **EP 3 855 925 B1**
(45) Date of publication and mention of the grant of the patent: **17.09.2025**
(21) Application number: 19798527.8
(22) Date of filing: 16.09.2019
(51) Int. Cl.: A21D 13/33, B65D 65/46

(54) **MIXTURE FOR PRODUCTION OF EDIBLE CONTAINERS FOR HOT AND COLD BEVERAGES AND FOOD**
MISCHUNG ZUR HERSTELLUNG VON ESSBAREN BEHÄLTERN FÜR HEISSE UND KALTE GETRÄNKE UND LEBENSMITTEL
MÉLANGE SERVANT À LA PRODUCTION DE RÉCIPIENTS COMESTIBLES DESTINÉS À DES BOISSONS ET À DES ALIMENTS CHAUDS ET FROIDS

(30) Priority: 27.09.2018 BG 11280718
(43) Date of publication of application: 04.08.2021
(73) Proprietor: Cupffee Ltd, 4002 Plovdiv (BG)
(72) Inventor: ZAPRYANOV, Miroslav Atanasov, 4000 Plovdiv (BG); GAVRAILOV, Simeon Krasimirov, 4002 Plovdiv (BG)
(74) Representative: Ilarionov, Pavko Jordanov
(86) International application number: PCT/BG2019/000020
(87) International publication number: WO 2020/061653

(56) References cited:
- WO-A1-2019/119075
- BG-U1- 2 170
- US-A- 5 304 386
- US-A1- 2014 057 024

## Description

### Field of invention

The invention relates to a mixture for production of edible containers for hot and cold beverages and food, which containers can be consumed during or after the drinking of the beverage or eating the food - for example coffee or food.

The invention will find application in the food industry and in people's everyday life.

### Background of the invention

It is known, that currently the containers used for drinking and eating are made from various materials such as ceramics, plastics, metal, glass and other, which are disposable or after appropriate washing - reusable. The containers themselves are not intended for consumption but only for storage of the food or liquid.

For consumption of liquids, such as coffee, usually are used plastic or paper disposable cups.

After usage, the disposable containers are being discarded and very often are scattered around because they are made of lightweight material and further pollute the environment. The self-degradation of such products can take decades.

Edible cups for hot beverages, prepared from mixture containing flour, water with a stabilizer (guar gum) dissolved in it, starch, oil, bicarbonate of soda, sugar, salt and a product of the pectin group are known e. g. from DE4218392 (A1).

After kneading, the dough for the edible cups is syringed into pre-prepared forms and then baked for a certain period of time to form a cup that can be consumed.

However, the prepared cup is quite hygroscopic and it is relatively quickly soluble, especially when hot drinks are served in it.

US5304386 discloses an edible container for cold liquid and semi-liquid fillings and is prepared from sugar, water, butter, flour, salt and optional spices.

A mixture for production of edible cups for hot and cold beverages is also known, containing the following ingredients by weight percentages: oat bran from 20.9 to 28.3 %, flour from 17.4 to 23.6 %, sugar from 7 to 9.4 %, gluten from 4.9 to 6.6 %, margarine (including of vegetable origin) from 7 to 9.4 %, alginate from 0.70 to 0.9 %, xanthan gum as a stabilizer from 0.70 to 0.9 %, salt from 0.35 to 0.5 %, potassium sorbate from 0.70 to 0.9 %, essence from 1.1 to 1.4 % and the rest up to 100 % - water. (PM BG 3057)

After kneading the dough for the edible cups is syringed into pre-prepared forms and then baked for a certain period of time to form cups (food container) that can be consumed.

The above described known mixture contains gluten, flavors, salt and preservatives and therefore the resulting product is not sufficiently dietary, environmentally friendly and durable with respect to the storage time of the beverage / food in it.

### Summary of the invention

It is an object of the invention to provide a mixture for production of edible containers for hot and cold beverages and food, which mixture is poorly soluble and the container will last long without being disintegrated, even when hot beverages are stored in it.

The proposed mixture for production of edible containers for hot and cold beverages and food, consists of the following ingredients by weight percentages:
- flour: 22.4 - 28.9 %,
- oat bran: 26.1 - 35.3 %,
- sugar: 7.5 - 10.1 %,
- vegetable fat: 3 - 4.04 %,
- alginate: 0.71 - 0.93 %,
- xanthan gum: 0.71 - 0,93 % and
- rest up to 100 % - water.

One preferred mixture for production of edible containers for hot and cold beverages and food, according to the present invention, consists of the following ingredients by weight percentages: 25.11 % wheat flour, 29.96 % oat bran, 8.81 % sugar, 3.52 % vegetable fat, 0.88 % alginate, 0.88 % xanthan gum and the rest up to 100% - water.

The most commonly used vegetable fat is a refined palm oil.

The most commonly used alginate is sodium alginate.

A wheat flour is preferably used.

An advantage of the present invention is that the containers, made of the proposed mixture last longer without disintegrating, even when hot beverages are stored.

Other advantage of the mixture is the increased manufacturability due to the reduced number of its ingredients. The resulting container is dietary, environmentally friendly and durable with respect to the storage time of the beverage/food, stored in it.

### An exemplary embodiment of the invention

The proposed mixture for production of edible containers for cold and hot beverages and food consists of the following ingredients by weight percentages:
- flour: 22.4 - 28.9 %,
- oat bran: 26.1 - 35.3 %,
- sugar: 7.5 - 10.1 %,
- vegetable fat: 3 - 4.04 %,
- alginate: 0.71 - 0.93 %,
- xanthan gum: 0.71 - 0.93 % and
- the rest up to 100 % - water.

One of the preferred mixtures for production of edible containers for hot and cold beverages and food consists of the following ingredients by weight percentages:
- 25.11 % wheat flour,
- 29.96 % oat bran,
- 8.81 % sugar,
- 3.52 % vegetable fat,
- 0.88 % alginate,
- 0.88 % xanthan gum and
- the rest up to 100 % - water.

The most commonly used vegetable fat is a refined palm oil.

The most commonly used alginate is sodium alginate.

### Preparation of edible containers.

Initially, all ingredients are weighed. The four dry ingredients - flour, oat bran, sugar and alginate - are then mixed and stirred.

The xanthan gum is then diluted in water and added to the dry mixture. The mixture is being stirred until it becomes homogeneous and then the vegetable fat is added, which was initially heated to 38°C in a thermostat. The ready mixture is stirred until complete homogeneity is achieved.

The following can be used as a vegetable fat: sunflower, rapeseed, margarine from vegetable fats, shea, coconut or cocoa butter.

After kneading and resting, the dough is fed to the collecting hopper of the dosing machine, which divides the dough into portions in the required quantities to fill the baking forms per unit of the product. This ensures that the baking molds are completely filled with dough.

The baking forms, which consist of two parts - upper and lower, can be of any shape. Most often they are cup-shaped, but they can also be in another form, such as a bowl or other, depending on the purpose of the containers - for drinking coffee, tea or food.

The dosage is then molded by pressing the upper part to the bottom part of the pre-heated mold. The baking of the dough after forming between the two parts of the mold is carried out at a temperature between 150°C and 180°C for a certain period of time depending on the desired degree of baking.

The product is then cooled and prepared for labeling and packaging.

A cupholder may be attached to the product, representing an arcuate adhesive tape with an unfolding handle, which is an exemplary embodiment of the product.

For the convenience of the user a product from this mixture can be made with a handle of the same dough.

The product thus prepared is a slightly hygroscopic, edible, wafer (biscuit) cup or bowl. It is designed for serving hot and cold liquids such as coffee, cappuccino, hot chocolate, hot and cold milk and other beverages and food. The product thus prepared can be consumed, for example, after drinking the beverage.

One of the applications of the product is to find a place in the cafes or restaurants as a replacement of the traditional porcelain containers or plastic disposable cups.

The conducted tests have shown that a container thus produced - a cup, bowl or other shape - can withstand without disintegration 40 ÷ 50 minutes, when the liquid stored in it is with a temperature between 80°C and 90°C.

The product thus produced, if not consumed but disposed, is environmentally friendly and 100% biodegradable in short period of time.

The main public benefit is the overall environmental orientation of the product (direct and indirect) - less waste, rapidly biodegradable, reduced use of water, detergents and less energy consumption.

## Claims

1. **Mixture for production of edible containers for hot and cold** beverages **and food,** consisting of flour, oat bran, sugar, vegetable fat, alginate, xanthan gum and water,
**characterized in that,**
the individual ingredients are in the following percentages by weight:
- flour: 22.4 - 28.9 %,
- oat bran: 26.1 - 35.3 %,
- sugar: 7.5 - 10.1 %,
- alginate: 0.71 - 0.93 %,
- xanthan gum: 0.71 - 0.93 %
- vegetable fat: 3 - 4.04 % and
- the rest up to 100 % - water.

2. **Mixture for production of edible containers for hot and cold beverages and food** according to claim 1,
**characterized in that,**
the individual ingredients are in the following percentages by weight:
- 25.11 % flour,
- 29.96 % oat bran,
- 8.81 % sugar,
- 3.52 % vegetable fat,
- 0.88 % alginate,
- 0.88 % xanthan gum and
- the rest up to 100 % - water.

3. **Mixture for production of edible containers for cold and hot beverages and food** according to claims 1 and 2,
**characterized in that,**
the vegetable fat is a refined palm oil.

4. **Mixture for production of edible containers for cold and hot beverages and food,** according to claims 1 and 2,
**characterized in that,**
the alginate is sodium alginate.

5. **Mixture for production of edible containers for cold and hot beverages and food,** according to claims 1 and 2
**characterized in that,**
the used flour is wheat flour.

## Patentansprüche

1. **Mischung zur Herstellung von essbaren Behältern für heisse und kalte Getränke und Lebensmittel, bestehend aus** Mehl, Haferkleie, Zucker, Alginat, Xanthan und Zucker,
**dadurch gekennzeichnet, dass** die einzelnen Zutaten in folgenden Gewichtsprozentsätzen enthalten sind:
- Mehl (22.4 - 28.9),
- Haferkleie (26.1 - 35.3),
- Zucker (7.5 - 10.1),
- Alginat (0,71 - 0,93),
- Xantan (0,71 - 0,93)
- Pflanzenöl (3 - 4,04) und
- der Rest bis zu 100 % - Wasser.

2. **Mischung zur Herstellung von essbaren Behältern für heisse und kalte Getränke und Lebensmittel** gemäß Anspruch 1, **dadurch gekennzeichnet, dass** die einzelnen Zutaten in folgenden Gewichtsprozentsätzen enthalten sind:
- Mehl (25,11%),
- Haferkleie (29,96%),
- Zucker (8,81%),
- Pflanzenöl (3,52%),
- Alginat (0.88%),
- Xanthan (0.88%) und
- der Rest bis zu 100% - Wasser.

3. **Mischung zur Herstellung von essbaren Behältern für heisse und kalte Getränke und Lebensmittel** gemäß Ansprüche 1 und 2,
**dadurch gekennzeichnet, dass** das Pflanzenöl raffiniertes Palmöl ist.

4. **Mischung zur Herstellung von essbaren Behältern für heisse und kalte Getränke und Lebensmittel** gemäß Ansprüche 1 und 2,
**dadurch gekennzeichnet, dass** das Alginat Natrium Alginat ist.

5. **Mischung zur Herstellung von essbaren Behältern für heisse und kalte Getränke und Lebensmittel** gemäß Ansprüche 1 und 2,
**dadurch gekennzeichnet, dass** das verwendete Mehl Weizenmehl ist.

## Revendications

1. **Mélange servant à la production de récipients comestibles destinés à des boissons et à des aliments chauds et froids, composé de** farine, son d'avoine, sucre, huile végétale, alginate, gomme xanthane et eau,
**caractérisé en ce que** les composants distincts sont dans les pourcentages en poids suivants:
- farine (22.4 - 28.9),
- son d'avoine (26.1 - 35.3),
- sucre (7.5 - 10.1),
- alginate (0,71 - 0,93),
- gomme xanthane (0,71 - 0,93)
- huile végétale (3 - 4,04) et
- le reste jusqu'à 100 %- eau.

2. **Mélange servant à la production de récipients comestibles destinés à des boissons et à des aliments chauds et froids,** selon la revendication 1, **caractérisé en ce que** les composants distincts sont dans les pourcentages en poids suivants:
- farine (25,11%),
- son d'avoine (29,96%),
- sucre (8,81%),
- huile végétale (3,52%),
- alginate (0.88%),
- gomme xanthane (0.88%) et
- le reste jusqu'à 100 % - eau.

3. **Mélange servant à la production de récipients comestibles destinés à des boissons et à des aliments chauds et froids,** selon les revendications 1 et 2,
**caractérisé en ce que** l'huile végétale est de l'huile de palme raffinée.

4. **Mélange servant à la production de récipients comestibles destinés à des boissons et à des aliments chauds et froids,** selon les revendications 1 et 2,
**caractérisé en ce que** l'alginate est de l'alginate de sodium.

5. **Mélange servant à la production de récipients comestibles destinés à des boissons et à des aliments chauds et froids,** selon les revendications 1 et 2,
**caractérisé en ce que** la farine utilisée est de la farine de blé.
